Europäisches Patentamt

European Patent Office

Office européen des brevets

(11) Publication number: **0 044 716**
A1

## EUROPEAN PATENT APPLICATION

(21) Application number: 81303279.4

(22) Date of filing: 16.07.81

(51) Int. Cl.³: **C 04 B 43/02**
C 04 B 41/04, C 03 C 25/02
C 04 B 35/00

(30) Priority: 18.07.80 GB 8023627

(43) Date of publication of application:
27.01.82 Bulletin 82/4

(84) Designated Contracting States:
AT BE CH DE FR GB IT LI LU NL SE

(71) Applicant: M. H. DETRICK CO., LIMITED
275/281, King Street
Hammersmith London, W6 9LZ(GB)

(72) Inventor: Barrie, John Harvey
16, Coach Road
Astley Tyldesley Lancashire(GB)

(74) Representative: Pennant, Pyers et al,
Stevens, Hewlett & Perkins 5 Quality Court Chancery
Lane
London, WC2A 1HZ(GB)

(54) Ceramic fibre composite and method of making it.

(57) A method of making a ceramic fibre composite, by
providing a liquid stream of a molten alumino-silicate
ceramic material and projecting a stream of gas at the liquid
stream whereby the ceramic material is fiberized, is character-
ized by entraining particles of a refractory oxide, particularly
alumina, in the gas stream so that the particles become
firmly attached to the fibres. The ceramic fibre composites
may have a composition of about 72% $Al_2O_3$ and 28% $SiO_2$
by weight, have reduced tendency to shrink or devitrify on
firing, and are environmentally advantageous.

EP 0 044 716 A1

## CERAMIC FIBRE COMPOSITE AND
## METHOD OF MAKING IT.

Ceramic alumino-silicate fibres have proven themselves to be an efficient refractory material for lining many types of industrial furnaces. Their many advantages such as low conductivity, resistance to chemical attack and lightness are well known.

However, these fibres have various disadvantages. They are capable of withstanding in continuous use temperatures of up to only about $1260^{\circ}C$; their infra-red radiation reflecting properties are not ideal; they shrink on reaching temperatures above $750^{\circ}C$ giving rise to engineering difficulties in their application; and on being heated to higher temperatures change to crystalline forms of silica such as crystobalite and tridymite which can be injurious if inhaled, and against which elaborate precautions must be taken in the interests of health.

It has long been known that the presence of free alumina within the mass of fibre is conducive to the formation of a harmless crystalline phase known as mullite rather than those of crystobalite or tridymite. Another consequence of the formation of mullite is that it results in growth rather than shrinkage on heating.

Mullite has the formula $3Al_2O_3.2SiO_2$ and a composition of 72% $Al_2O_3$ and 28% $SiO_2$ by weight. Ceramic fibres generally contain 40% to 65% by weight of each of alumina and silica. The conventional method of manufacture involves pouring a liquid stream of the desired chemical composition through a blast of gas which comminutes the stream and fiberizes the droplets. However, when the droplets contain more than about 65% by weight alumina, the melt becomes too viscous, so it is not possible by conventional methods to make ceramic alumino-silicate fibres containing as much as 72% by weight alumina.

Another approach which has been tried is to incorporate with the preformed ceramic fibres an amount of alumina such that mullite will tend to be formed, in preference to crystobalite or tridymite, at high temperatures. The amount necessary for this purpose is readily determined. For example, alumina in the form of a sol or in coarser forms can be washed into or mixed with fibres. However, these processes have disadvantages. The contact between the alumina and the fibres is not intimate and is uneven and uncertain.    Further washing may remove the alumina.

In addition certain sols or washes such as Boehmite, as well as introducing insufficient alumina, interfere with further processing of the fibre mass because of their gelatinous nature.

It is an object of this invention to avoid these disadvantages.    However, the invention is not limited to additions of alumina.

In its broadest aspect, the invention provides a ceramic fibre composite comprising ceramic alumino-silicate fibres, and firmly adhering thereto, a coating or discrete particles of a refractory oxide.

This invention envisages ceramic fibre products made by any process;  for example, the blowing process in which a stream of molten alumino-silicate material is fibrized by a blast of gas;  or the spinning disc process in which a stream of the molten material impinges on a spinning disc; provided that the refractory oxide is firmly bonded to the fibres.    It is thought that bonding occurs as a result of contact between the oxide particles and the fibres as the latter are solidifying or about to solidify.

As indicated above, one refractory oxide envisaged according to the invention is alumina.    Others are titanium dioxide, zirconium dioxide and chromic oxide, which may be used in amounts of up to 25%, preferably from 1% to 10%, by weight on the weight of the fibre composite. It is known that these three oxides can enable alumino-silicate ceramic fibres to withstand higher temperatures. In addition, titanium dioxide and zirconium dioxide can improve their infra-red radiation reflecting properties. Other refractory oxides may be used to provide these or other advantages.

At least the majority, and preferably all, the refractory oxide is firmly attached to the ceramic fibres and may form a coating round the fibres or be in the form of discrete particles partly or completely embedded in the fibres.

Alumina, when used, is preferably present in an amount such that the overall composition of the composite is appropriate for the formation of mullite at high temperatures; that is to say comprises alumina and silica in a weight ratio of 2:1 to 4:1, particularly about 2.57:1. On conventional alumino-silicate ceramic fibres averaging 3 microns in diameter, a continuous alumina coating about half a micron thick would provide a composite of overall composition appropriate for forming mullite.

In another aspect, the invention provides a method of making a ceramic fibre composite by providing a liquid stream of a molten alumino-silicate ceramic material and projecting a stream of gas at the liquid stream whereby the ceramic material is converted into fibres, characterised in that particles of a refractory oxide are entrained in the gas stream so that the said particles become firmly attached to the fibres.

Ceramic fibres typically have diameters of a few microns. The particles of the refractory oxide may have diameters of up to 50 microns, but are preferably of sub- micron size. For example, colloidal alumina from an aqueous sol may suitably be used. The oxide particles entrained in the gas stream contact the ceramic droplets as they are cooled and fiberized and are beleived to become embedded in the fibres or sintered to the surface thereof, either as discrete particles or in the form of a partial or complete coating. Those particles that are so attached to the fibres cannot be removed by washing or by the normal mechanical treatments to which ceramic fibres are generally subjected. Moreover the very intimate contact between fibres and alumina greatly reduces the risk of forming undesirable forms of silica on firing.

The refractory oxide may be entrained in the stream of gas by conventional means.    For example a concentrated
sol of alumina or other refractory oxide may be entrained
in the stream of gas by means of a venturi.    The rate of
flow of the liquid stream of molten alumino-silicate ceramic
material, the rate of flow of the stream of gas, and the
other variables of the fiberizing process may be conventional.    Only some of the refractory oxide particles in the
gas stream become attached to the fibres, and it is therefore necessary to entrain an excess of the refractory oxide
particles in the gas stream;    the surplus may be recovered
for re-use.

When ceramic fibre composites, containing refractory
oxides in addition to alumino-silicate fibre, are fired,
chemical reactions take place and modify the properties
of the fibre.    For example, titanium dioxide and zirconium
dioxide react with alumina to form aluminates;    excess
alumina retards devitrification and encourages the formation of crystalline mullite.    When refractory oxides have
been physically mixed with ceramic fibres, e.g. in a slurry,
it is typically necessary to fire the resulting composites
for from 50 to 200 hours to effect the desired reactions.
By contrast, ceramic fibre composites of the present
invention can, by virtue of the intimate contact between
fibre and refractory oxide, be fired for less than 10 hours, e.g. 3 to 4 hours in order to effect the desired reactions.

The accompanying drawing is a scanning electron micrograph at 2000 x magnification of an alumino-silicate ceramic fibre 10 about 10 microns in diameter. The part of the fibre in the upper half of the picture is covered with a uniform coating 12 about 1 micron thick of alumina. The part of the fibre in the lower half of the picture has, firmly adhering thereto, discrete particles 14 of alumina a few microns in diameter.

The following Examples illustrate the invention.

### EXAMPLE 1

3 kg of a mixture of 45% by weight of alumina and 55% by weight of silica sand was melted in an induction furnace and the molten liquid caused to flow through a hole 8 mm in diameter. A stream of compressed air was blown at 1 MPa through a 3 mm nozzle at the stream of liquid. Entrained in the stream of air at a rate of 100 ccs, per minute was a 30% solids aqueous sol of sub-micron alumina particles.

The resulting fibre had good tensile strength and good texture. The fibres had two types of coating, namely a covering of fine particles (less than 2 microns) along much of the fibre length, and a number of globules attached firmly to the fibres at infrequent points along their length.   Microanalysis confirmed that these globules (up to 40 microns) were alumina.

<div align="center">EXAMPLE 2</div>

Conditions were as in Example 1, except that a 40% solids aqueous sol of sub-micron alumina particles was entrained in the stream of air at a rate of 80 ccs per minute.

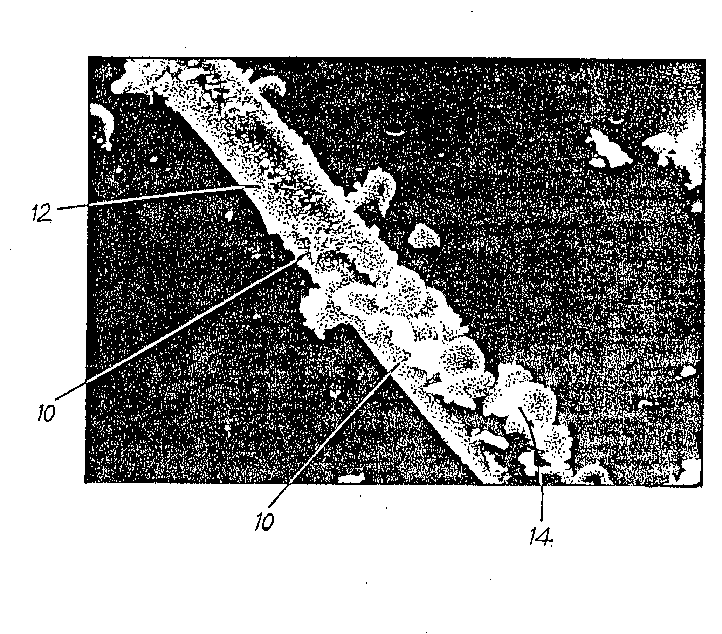

The resulting fibre was somewhat brittle.   A thick friable coating covered the surface of the fibres.   Some larger globules were also present in this coating.   Figure 1 is a scanning electron micrograph of a fibre produced in this experiment.

The aqueous sols used in Examples 1 and 2 were prepared from a commercially available white free-flowing powder containing 65% alumina of particle size typically 0.1 micron and surface area 250-300 $m^2/g$, together with 35% water. This powder is easily dispersable in water to give an aqueous sol of pH 4-4.5.

## CLAIMS

1. A ceramic fibre composite comprising ceramic alumino-silicate fibres and, firmly adhering thereto, a coating or discrete particles of at least one refractory oxide.

2. A ceramic fibre composite as claimed in claim 1, wherein the refractory oxide is alumina.

3. A ceramic fibre composite as claimed in claim 1 or claim 2, wherein the overall composition consists essentially of alumina and silica in a weight ratio of from 2:1 to 4:1.

4. A ceramic fibre composite as claimed in claim 1, wherein the refractory oxide is at least one of titanium dioxide, zirconium dioxide and chromic oxide.

5. A ceramic fibre composite as claimed in any one of claims 1 to 4, wherein the particles of refractory oxide are of sub-micron size.

6. A ceramic fibre composite as claimed in claim 5, wherein the refractory oxide forms a coating round the fibres.

7. A method of making ceramic fibre composite by providing a liquid stream of a molten alumino-silicate ceramic material and projecting a stream of gas at the liquid stream whereby the ceramic material is converted into fibres, characterized in that particles of a refractory oxide are entrained in the gas stream so that the particles become firmly attached to the fibres.

8. A method as claimed in claim 7, wherein the refractory oxide is alumina.

9. A method as claimed in claim 8, wherein the alumina is used in an amount such that the resulting composite consists essentially of alumina and silica in a weight ratio of from 2:1 to 4:1.

10. A method as claimed in any one of claims 7 to 9, wherein an aqueous sol containing sub-micron particles of the refractory oxide is entrained in the stream of gas.

1/1

0044716

European Patent Office

**EUROPEAN SEARCH REPORT**

Application number

EP 81 30 3279

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| EPX | EP - A - 0 019 469 (CARBORUNDUM COMP.) <br> * Page 7, lines 5-23; page 8, lines 2-9; page 12, example 2 * | 1,4,5, 7,10 | C 04 B 43/02 <br> 41/06 <br> C 03 C 25/02 <br> C 04 B 35/00 |
| X | FR - A - 2 229 665 (MAXWELL CHE-MICALS) <br> * Page 1, lines 34-35; page 2, lines 7-15, 26-29; page 6, claims 1,2,4,5 * | 1,2,4, 6 | |
| X | GB - A - 503 979 (C. HANNEN) <br> * Page 1, lines 8-15, 48-58 * | 7 | TECHNICAL FIELDS SEARCHED (Int. Cl.³) <br><br> C 04 B 43/00 <br> 31/00 <br> 41/00 <br> 35/00 <br> C 03 C 25/00 |
| | US - A - 3 953 185 (S. AOKI et al.) <br> * Claims 1,5,6 * | 1,2,4, 7,8 | |
| | FR - A - 2 320 915 (QUARTZ & SILI-CE) <br> * Page 8, claims 1,2,4,5,6 * | 1,2,4, 6,7,8 | |
| A | US - A - 1 818 346 (O.F. MOTTWEILER et al.) | | CATEGORY OF CITED DOCUMENTS |
| A | US - A - 4 125 406 (MMM) | | X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

The present search report has been drawn up for all claims

| Place of search | Date of completion of the search | Examiner |
|---|---|---|
| The Hague | 19-10-1981 | DAELEMAN |

EPO Form 1503.1   06.78